# EUROPÄISCHE PATENTSCHRIFT

(11) **EP 0 457 873 B1**
(45) Veröffentlichungstag und Bekanntmachung des Hinweises auf die Patenterteilung: **13.07.1994**
(21) Anmeldenummer: 91900166.9
(22) Anmeldetag: 07.12.1990
(51) Int. Cl.: G01M 17/00

(54) **FAHRROBOTER**
ROBOT DRIVER
ROBOT-CONDUCTEUR

(30) Priorität: 08.12.1989 DE 3940588
(43) Veröffentlichungstag der Anmeldung: 27.11.1991
(73) Patentinhaber: WITT, Georg, D-38126 Braunschweig (DE)
(72) Erfinder: WITT, Georg, D-38126 Braunschweig (DE)
(74) Vertreter: Lins, Edgar, Dipl.-Phys. Dr.jur.
(86) Internationale Anmeldenummer: DE9000953
(87) Internationale Veröffentlichungsnummer: WO9109290

(56) Entgegenhaltungen:
- EP-A- 0 235 333
- EP-A- 0 236 518
- DE-A- 3 303 588
- DE-A- 3 744 631
- DE-B- 2 004 979
- US-A- 3 465 577
- US-A- 3 889 527
- US-A- 3 999 425
- US-A- 4 046 262
- PATENT ABSTRACTS OF JAPAN, Band 5, Nr. 177, P 89, Zusammenfassung von JP 56 107145, publ. 25.08.1981

## Beschreibung

Die Erfindung betrifft einen Fahrroboter für ein Kraftfahrzeug, der ein zentrales, im Fahrgastraum zu befestigendes Gehäuse und Betätigungselemente für Gaspedal, Bremse und/oder Kupplung sowie Schalt- bzw. Wählhebel aufweist.

Es ist bekannt, daß die Funktionskontrolle von Kraftfahrzeugen, insbesondere auch die Kontrolle von Abgaswerten, auf Rollenprüfständen mit Hilfe von Fahrrobotern erfolgen kann, die gegenüber einem menschlichen Fahrer den Vorteil eines exakt steuerbaren Programmablaufs und einer relativ geringen Streuung der Meßwerte gewährleisten. Derartige Fahrroboter sind daher in zahlreichen Ausführungsformen im Einsatz.

Es ist bekannt, das zentrale Gehäuse, an dem die Betätigungselemente für Gaspedal, Bremse, ggf. Kupplung sowie Schalt- bzw. Wählhebel nach Ausbau des Fahrersitzes an der Verankerung des Fahrersitzes zu befestigen. Der hiermit verbundene Montageaufwand ist erheblich, so daß sich eine derartige Ausführungsform nicht durchsetzen konnte.

Durch einen vorbenutzten, von dem Anmelder hergestellten und von der WECO Industrietechnik GmbH vertriebenen Fahrroboter, dokumentiert in einem Prospekt dieses Unternehmens mit dem Titel "WECO Industrietechnik - WECO Fahrroboter", ist es bekannt, das zentrale Gehäuse des Fahrroboters auf dem Fahrersitz dadurch zu befestigen, daß sich das Gehäuse einerseits an der Rückenlehne und an der Sitzfläche des Fahrgastsitzes abstützt und andererseits mit Halteblechen die Außenkanten der Sitzpolster übergreift. Diese Befestigungsart hat sich an sich bewährt, stößt aber bei einer zunehmenden Technisierung der Sitze auf Schwierigkeiten, weil die Seiten der Sitzflächen durch Bedien- und/oder Steuerelemente belegt werden, so daß die Montage von Halteblechen nicht mehr - jedenfalls nicht ohne weiteres - möglich ist.

In der EP-A- 0 235 333 ist ein Fahrroboter beschrieben, dessen zentrales Gehäuse im Fußraum des Fahrersitzes unter den Sitz greifend auf dem Boden des Fahrgastraumes abgestützt ist und an seiner Oberseite mit einem verstellbaren Gestänge am Lenkrad dadurch befestigt ist, daß eine eine Drehung des Lenkrades ermöglichende Verbindung am unteren Scheitel des Lenkrades hergestellt wird. Zu diesem Zweck wird auf das Lenkrad eine Plattform aufgesetzt, die in Umfangsrichtung verlaufende, nach unten offene Nuten aufweist, in denen Führungselemente des vom Gehäuse ausgehenden Gestänges eingreifen können, um so eine Fixierung des Gehäuses relativ zum Lenkrad zu ermöglichen. Diese Anordnung weist erhebliche Nachteile auf. Diese bestehen insbesondere darin, daß eine sichere Abstützung mit einer großen Auflagefläche auf dem Boden des Fahrgastraumes bei noch vorhandenem Fahrersitz in aller Regel nicht möglich ist und daß der Lenkradkranz mit Reaktionskräften belastet wird, die die Grenzen der Belastbarkeit des Lenkradkranzes erreichen können. Je nach Stabilität des Lenkradkranzes kann sich dieser mehr oder weniger verbiegen und damit eine Unsicherheit bei der Positionierung des Fahrroboters und damit eine Ungenauigkeit bei der Betätigung der Pedale und Hebel des Kraftfahrzeuges ergeben.

Die vorliegende Erfindung geht von der Problemstellung aus, eine Befestigung für einen Fahrroboter in einem Kraftfahrzeug zu erreichen, die weder einen Ausbau des Fahrersitzes benötigt noch zu Festigkeitsproblemen bzw. Abhängigkeiten vom Material des Lenkradkranzes aufweisen.

Ausgehend von dieser Problemstellung weist ein erfindungsgemäßer Fahrroboter mit den eingangs erwähnten Merkmalen die weiteren Merkmale auf, daß das Gehäuse zur Abstützung auf der Sitz- und Rückenlehnenfläche des Fahrersitzes vorgesehen und mit einer Stange verbunden ist, die einen auf das Lenkrad aufsetzbaren Lenkradrahmen aufweist und mit diesem mittig am Lenkrad montierbar ist.

In Übereinstimmung mit der EP-A- 0 235 333 stützt sich der Fahrroboter am Lenkrad des Kraftfahrzeuges ab. Das zentrale Gehäuse des Fahrroboters ist aber nicht im Fußraum angeordnet, sondern auf dem Fahrersitz, so daß die Befestigung des erfindungsgemäßen Fahrroboters einerseits an dem Fahrersitz und andererseits an dem Lenkrad erfolgt. Um von der Stabilität des Lenkrades unabhängig zu werden und den Lenkradkranz nicht mit den Reaktionskräften zu belasten, werden die Haltekräfte mit einer mit der Lenkachse fluchtenden Stange auf das Lenkrad übertragen, so daß eine Abstützung an der stabilen Lenkachse erfolgt und das Lenkrad zentral in Fortsetzung der Lenkachse mit den Reaktionskräften beaufschlagt wird. Die Anordnung des zentralen Gehäuses des Fahrroboters auf dem Fahrersitz ermöglicht dabei, eine Verbindung mit der die Lenkachse fortsetzenden Stange über relativ kurze Hebelarme herzustellen.

Zur Anpassung an verschiedene Fahrzeugtypen ist es zweckmäßig, wenn die Verbindung des Fahrroboters mit der Stange in unterschiedlichen Abständen zur Lenkradebene herstellbar ist. Hierzu kann die Stange in einer einfachen Ausführungsform an ihrem freien Ende eine Mehrzahl von Durchgangslöchern aufweisen, durch die ein mit einem Verbindungsgestänge zum zentralen Gehäuse koppelnder Verbindungsstift hindurchsteckbar ist, der beispielsweise auch eine U-Form aufweisen kann.

Der Lenkradrahmen wird vorzugsweise mit verstellbaren Spannvorrichtungen an der Oberseite und seitlich am Lenkrad befestigt und zentriert. Die Spannvorrichtungen sollten dabei einen solchen Spannhub aufweisen, daß eine Befestigung des Lenkradrahmens auf allen Durchmessern gängiger Lenkräder möglich ist.

In einer zweckmäßigen Ausführungsform weist der Lenkradrahmen eine die Lenkachse überquerende Platte auf, die mit einer Aufnahme für die Stange versehen ist. Die Verbindung der Stange mit der Aufnahme kann dabei mit einem Bajonettverschluß erfolgen, der die Verbindung auch bei einer ggf. notwendigen geringen Lenkradbewegung zur Zentrierung des Fahrzeuges auf dem Rollenstand beibehält.

Eine Drehung des zentralen Gehäuses wird dadurch verhindert, daß eine Verbindung von beiden Seiten des zentralen Gehäuses zu der zentralen, mit der Lenkachse fluchtenden Stange hergestellt wird, vorzugsweise in Form eines die Oberseite des Gehäuses überspannenden Bügels, der mittig ein Verbindungselement zur Stange aufweist.

Um von Materialeigenschaften des Polsters des Fahrersitzes weitgehend unabhängig zu werden, ist es zweckmäßig, wenn ein starrer L-förmiger Sitzrahmen auf dem Fahrersitz aufgesetzt ist und dieser Sitzrahmen das zentrale Gehäuse trägt.

Die Erfindung soll im folgenden anhand eines in der Zeichnung dargestellten Ausführungsbeispiels näher erläutert werden. Es zeigen:
- Figur 1 -: eine Seitenansicht auf einen im Fahrgastraum eines Kraftfahrzeuges untergebrachten Fahrroboter, der sich auf dem Fahrersitz und am Lenkrad abstützt

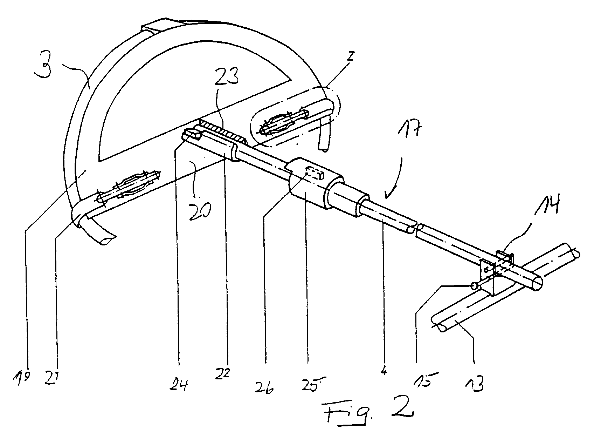

- Figur 2 -: eine perspektivische Ansicht auf einen auf das Lenkrad aufgespannten Lenkradrahmen und einer daran befestigten Stange, die die Lenkachse fortsetzt und
- Figur 3 -: eine Seitenansicht einer Spannvorrichtung, die den Lenkradkranz übergreift.

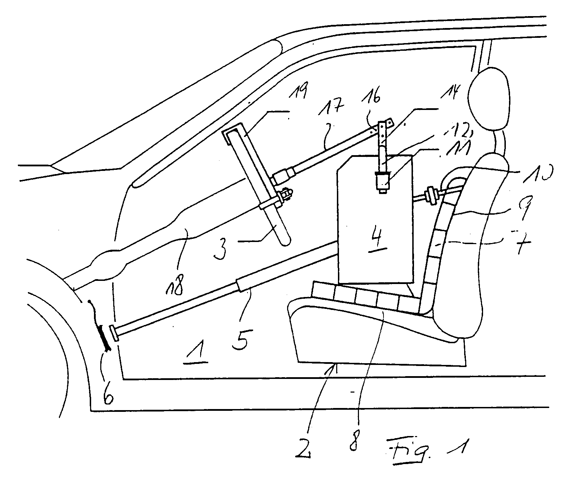

Figur 1 läßt den Fahrgastraum 1 eines Kraftfahrzeuges im Bereich eines Fahrersitzes 2 und des Lenkrades 3 erkennen. Der Fahrroboter besteht aus einem zentralen Gehäuse 4, von dem wenigstens ein Betätigungselement 5 zur Betätigung von Pedalen 6 und/oder eines (nicht dargestellten) Schalt- oder Wählhebels des Kraftfahrzeugs aufweist.

Das zentrale Gehäuse 4 stützt sich über einen L-förmigen Sitzrahmen 7 sowohl auf der Sitzfläche 8 als auch an der Rückenfläche 9 des Fahrersitzes 2 ab. Die Abstützung an der Rückenfläche 9 erfolgt dabei über eine längenverstellbare Stützvorrichtung 10.

In Fahrtrichtung gesehen seitlich weist das zentrale Gehäuse 4 zwei Buchsen 11 auf, die die beiden Enden eines umgedrehten U-förmigen Bügels 12 aufnehmen. An der Quertraverse 13 des U-förmigen Bügels 12 ist mittig eine Halterung 14 bestehend aus zwei nach oben ragenden parallelen Blechen angebracht, die Durchgangsöffnungen für einen U-förmigen Arretierungsstift 15 aufweisen.

Der Arretierungsstift 15 ragt durch eine Durchgangsöffnung 16 einer Stange 17 hindurch, die so ausgerichtet ist, daß sie mit der Lenkachse 18 des Lenkrades 3 fluchtet, d. h. die Lenkachse 18 auf der Fahrerseite des Lenkrades 3 fortsetzt. Die Verbindung der Stange 17 mit dem Lenkrad 3 erfolgt über einen Lenkradrahmen 19, der im wesentlichen die obere Hälfte des Lenkrades 3 abdeckt und mit einer die Lenkachse 18 überspannenden Platte 20 nach unten abgeschlossen ist. Der Lenkradrahmen 19 ist an drei Stellen mit dem Lenkrad 3 verbunden, und zwar an wenigstens zwei Stellen mit Spannvorrichtungen 21, deren Spannhub so ausgelegt ist, daß sie an verschiedene übliche Lenkraddurchmesser anpaßbar sind. Auf der Platte 20 ist eine hohlzylindrische Aufnahme 22 angebracht, die einen Längsschlitz 23 aufweist, der sich im Bereich der Platte 22 in Umfangsrichtung stufenförmig erweitert und so zusammen mit einem Vorsprung 24 der Stange 17 einen Bajonettverschluß bildet. Die dadurch bewirkte Festlegung der Stange 17 erlaubt eine Drehbewegung des Lenkrades 3, wie sie zur Zentrierung des Kraftfahrzeuges auf einem Rollenprüfstand ggf. erforderlich ist. Eine Arretierungshülse 25, die in einer stufenförmigen Erweiterung des Innendurchmessers einen nach innen ragenden Vorsprung 26 aufweist, ist mit Hilfe des Vorsprunges ebenfalls in dem Bajonettverschluß festlegbar und verhindert ein zufälliges Lösen der durch den Bajonettverschluß hergestellten Verbindung zwischen der Aufnahme 22 und der Stange 17.

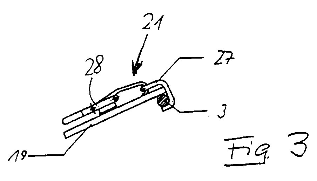

Figur 3 verdeutlicht im Detail die Befestigung des Lenkradrahmens 19 an dem Kranz des Lenkrades 3 mit einem im wesentlichen U-förmigen Blech 27, das mit einem üblichen Spannhebel 28 die Spannvorrichtung 21 bildet.

Die erfindungsgemäße Befestigung des Fahrroboters bewirkt, daß durch die Betätigung der Pedale 6 auftretende Reaktionskräfte in der Lenkachse 18, also im Zentrum der Lenksäule aufgenommen werden. Beschädigungen des Lenkrades und insbesondere der Lenksäule durch außerhalb des Zentrums aufzunehmende Reaktionskräfte, wie sie bei der EP 0 235 333 B1 auftreten, sind somit ausgeschlossen.

## Patentansprüche

1. Fahrroboter für ein Kraftfahrzeug, der ein zentrales, im Fahrgastraum (1) zu befestigendes, Gehäuse (4) und Betätigungselemente (5) für Pedale (6) sowie gegebenenfalls Schalt- bzw. Wählhebel aufweist, wobei das Gehäuse (4) zur Abstützung auf der Sitz- und Rückenlehnenfläche (8,9) des Fahrersitzes während des Gebrauchs vorgesehen ist und mit einer Stange (17) verbunden ist, die einen auf das Lenkrad (3) aufsetzbaren Lenkradrahmen (19) aufweist und mit diesem mittig am Lenkrad (3) montierbar ist.

2. Fahrroboter nach Anspruch 1, bei dem die Verbindung mit der Stange (17) in unterschiedlichen Abständen zur Lenkradebene herstellbar ist.

3. Fahrroboter nach Anspruch 2, bei dem die Stange (17) an ihrem freien Ende eine Mehrzahl von Durchgangslöchern (16) aufweist, durch die ein mit einem Verbindungsgestänge (12, 13,14) zum zentralen Gehäuse (4) koppelnder Verbindungsstift (15) hindurchsteckbar ist.

4. Fahrroboter nach einem der Ansprüche 1 bis 3, bei dem der Lenkradrahmen (19) mit verstellbaren Spannvorrichtungen (21) an der Oberseite und seitlich am Lenkrad 1(3) befestigbar und zentrierbar ist.

5. Fahrroboter nach einem der Ansprüche 1 bis 4, bei dem der Lenkradrahmen (19) eine die Lenkachse (18) überquerende Platte (20) aufweist, die mit einer Aufnahme (22) für die Stange (17) versehen ist.

6. Fahrroboter nach Anspruch 5, bei dem die Stange (17) in der Aufnahme (22) mit einem Bajonettverschluß (23,24) arretierbar ist.

7. Fahrroboter nach einem der Ansprüche 1 bis 6, bei dem das Gestänge (12,13,14) beidseitig am zentralen Gehäuse (4) befestigt ist, die Oberseite des Gehäuses in Form eines Bügels (12) überspannt und mittig ein Verbindungselement (14) zur Stange (17) aufweist.

8. Fahrroboter nach einem der Ansprüche 1 bis 7, bei dem ein starrer L-förmiger Sitzrahmen (7) auf den Fahrersitz (2) aufgesetzt ist und das zentrale Gehäuse (4) stützt.

## Claims

1. Robot driver for a motor vehicle, which has a central housing (4) to be secured in the passenger compartment (1) and actuating elements (5) for pedals (6) as well as, if appropriate, switching or selecting levers, the housing (4) being intended for resting on the seat and backrest surfaces (8, 9) of the driver's seat during use and being connected to a rod (17) which has a steering wheel frame (19) which can be placed onto the steering wheel (3) and which, together with said steering wheel frame, can be mounted centrally on the steering wheel (3).

2. Robot driver according to Claim 1, in which the connection to the rod (17) can be produced at different spacings from the steering wheel plane.

3. Robot driver according to Claim 2, in which the rod (17) has on its free end a plurality of passage holes (16) through which there can be inserted a connection pin (15) which is coupled by means of a connection linkage (12, 13, 14) to the central housing (4).

4. Robot driver according to one of Claims 1 to 3, in which the steering wheel frame (19) can be secured and centred on the upper side and laterally on the steering wheel (3) by means of adjustable clamping devices (21).

5. Robot driver according to one of Claims 1 to 4, in which the steering wheel frame (19) has a plate (20) which traverses the steering axle (18) and which is provided with a receiver (22) for the rod (17).

6. Robot driver according to Claim 5, in which the rod (17) can be locked in the receiver (22) by means of a bayonet closure (23, 24).

7. Robot driver according to one of Claims 1 to 6, in which the linkage (12, 13, 14) is secured on either side on the central housing (4), spans over the upper side of the housing in the form of a clip (12) and in the centre has a connection element (14) to the rod (17).

8. Robot driver according to one of Claims 1 to 7, in which a rigid L-shaped seat frame (7) is placed onto the driver's seat (2) and supports the central housing (4).

## Revendications

1. Robot de pilotage pour un véhicule automobile, présentant un carter (4) central, à fixer dans l'habitacle (1), et des éléments d'actionnement (5) pour des pédales (6) ainsi que, le cas échéant, un levier de vitesse, respectivement de sélection, le carter (4) étant prévu pour prendre appui sur les surfaces d'assise et de dossier (8, 9) du siège du conducteur, pendant l'utilisation, et relié à une tige (17) présentant un cadre à volant (19), susceptible d'être appliquée sur le volant (3) et susceptible d'être montée, à l'aide de ce cadre, centralement, sur le volant (3).

2. Robot de pilotage selon la revendication 1, dans lequel la liaison à la tige (17) peut être établie avec des espacements différents par rapport au plan du volant.

3. Robot de pilotage selon la revendication 2, dans lequel la tige (17) présente à son extrémité libre une pluralité de trous traversants (16), à travers lesquels peut être enfichée une goupille de liaison (15) assurant un couplage par rapport au carter central (4), à l'aide d'une tringlerie de liaison (12, 13, 14).

4. Robot de pilotage selon l'une des revendications 1 à 3, dans lequel le cadre à volant (19) peut être fixé et centré, en face supérieure et latéralement, sur le volant (3), à l'aide de dispositifs de serrage (21) réglables.

5. Robot de pilotage selon l'une des revendications 1 à 4, dans lequel le cadre à volant (19) présente une plaque (20), passant transversalement par rapport à l'axe de direction (18) et pourvue d'un logement (22) pour la tige (17).

6. Robot de pilotage selon la revendication 5, dans lequel la tige (17) peut être fixée dans le logement (22) à l'aide d'un joint à baïonnette (23, 24).

7. Robot de pilotage selon l'une des revendications 1 à 6, dans lequel la tringlerie (12, 13, 14) est fixée des deux côtés sur le carter central (4), en entourant la face supérieure du carter, sous la forme d'un étrier (12), et présentant centralement un élément de liaison (14) assurant la liaison par rapport à la tige (17).

8. Robot de pilotage selon l'une des revendications 1 à 7, dans lequel un cadre d'assise (7) rigide, en forme de L, est placé sur le siège du conducteur (2) et soutient le carter central (4).
